(19) Europäisches Patentamt
European Patent Office
Office européen des brevets

(11) **EP 2 002 873 A1**

(12) **EUROPÄISCHE PATENTANMELDUNG**

(43) Veröffentlichungstag:
**17.12.2008 Patentblatt 2008/51**

(51) Int Cl.:
***B01D 25/28*** *(2006.01)*      ***B01D 25/21*** *(2006.01)*

(21) Anmeldenummer: **07109928.7**

(22) Anmeldetag: **08.06.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Tronox Pigments GmbH**
**47829 Krefeld (DE)**

(72) Erfinder:
• **Baumann, Frank**
**47802 Krefeld (DE)**
• **Günnel, Horst**
**47906 Kempen (DE)**
• **Bonath, Hans-Jörg**
**77704 Oberkirch (DE)**

(74) Vertreter: **Viering, Jentschura & Partner**
**Centroallee 263**
**46047 Oberhausen (DE)**

(54) **Filtrationsverfahren und Filtervorrichtung**

(57) Bei einem Filtrationsverfahren, bei welchem eine einen, vorzugsweise feinteiligen, Feststoffanteil aufweisende Suspension einem in einer Filterkammer (4) zwischen zwei gegenüberliegenden Filtertüchern (5, 6) ausgebildeten Filtrationsraum (7) zugeführt wird, in dem Filtrationsraum (7) auf den Filtertüchern (5, 6) der Feststoffanteil der Suspension unter Ausbildung eines Filterkuchens abgeschieden und das durch die Filtertücher (5, 6) hindurch getretene Filtrat mittels mindestens jeweils eines auf der filterkuchenabgewandten Seite (10a, 10b) der Filtertücher (5, 6) mit der Filterkammer (4) verbundenen Filtratkanals (12, 13, 14, 15) aus der Filterkammer (4) abgeführt wird sowie der Filterkuchen nachfolgend in dem Filtrationsraum (7) einem Waschprozess mit Waschfluid, vorzugsweise vollentsalztem Wasser, unterworfen wird, bei welchem Waschprozess durch mindestens einen mit einer diesseitigen .Seite der Filterkammer (4) verbundenen Kanal Waschfluid in die Filterkammer (4) eingeleitet und nach Durchfließen des Filtrationsraumes (7) und des Filterkuchens das Waschfluid durch mindestens einen auf der gegenüberliegenden Seite des Filterkuchens und der Filterkammer (4) angeordneten Kanal oder Filtratkanal (12, 13, 14, 15) aus der Filterkammer (4) abgeführt wird, soll eine Lösung geschaffen werden, die es ermöglicht, den Auswaschgrad von gebildetem Filterkuchen in Filterpressen zu erhöhen. Dies wird dadurch erreicht, dass der Waschprozess als Filterkuchenwäsche mit mindestens zwei Waschprozessschritten durchgeführt wird, während welcher der Filterkuchen von dem Waschfluid mit jeweils unterschiedlicher Hauptströmungsrichtung von einem auf der einen oder diesseitigen Seite der Filterkammer (4) angeordneten Kanal oder Filtratkanal (12, 15) zu einem oder mehreren jeweils auf der anderen oder jenseitigen Seite der Filterkammer angeordneten Kanal oder Filtratkanal oder Filtratkanälen (13, 14) durchströmt wird.

FIG.4

**Beschreibung**

Die Erfindung richtet sich auf ein Filtrationsverfahren, bei welchem eine, einen, vorzugsweise feinteiligen, Feststoffanteil aufweisende Suspension einem in einer Filterkammer zwischen zwei gegenüberliegenden Filtertüchern ausgebildeten Filtrationsraum zugeführt wird, in dem Filtrationsraum auf den Filtertüchern der Feststoffanteil der Suspension unter Ausbildung eines Filterkuchens abgeschieden und das durch die Filtertücher hindurch getretene Filtrat mittels mindestens jeweils eines auf der filterkuchenabgewandten Seite der Filtertücher mit der Filterkammer verbundenen Filtratkanals aus der Filterkammer abgeführt wird sowie der Filterkuchen nachfolgend in dem Filtrationsraum einem Waschprozess mit Waschfluid, vorzugsweise vollentsalztem Wasser, unterworfen wird, bei welchem Waschprozess durch mindestens einen mit einer diesseitigen Seite der Filterkammer verbundenen Kanal Waschfluid in die Filterkammer eingeleitet und nach Durchfließen des Filtrationsraumes und des Filterkuchens das Waschfluid durch mindestens einen auf der gegenüberliegenden jenseitigen Seite des Filterkuchens und der Filterkammer angeordneten Kanal oder Filtratkanal aus der Filterkammer abgeführt wird.

Weiterhin richtet sich die Erfindung auf ein Filtrationsverfahren, bei welchem eine einen, vorzugsweise feinteiligen, Feststoffanteil aufweisende Suspension einem in einer Filterkammer zwischen zwei gegenüberliegenden Filtertüchern ausgebildeten Filtrationsraum zugeführt wird, in dem Filtrationsraum auf den Filtertüchern der Feststoffanteil der Suspension unter Ausbildung eines Filterkuchens abgeschieden und das durch die Filtertücher hindurch getretene Filtrat mittels mindestens jeweils eines auf der filterkuchenabgewandten Seite der Filtertücher mit der Filterkammer verbundenen Filtratkanals aus der Filterkammer abgeführt wird sowie der Filterkuchen nachfolgend in dem Filtrationsraum einem Waschprozess mit Waschfluid, vorzugsweise vollentsalztem Wasser, unterworfen wird, bei welchem durch mindestens einen Kanal Waschfluid in den Filtrationsraum eingeleitet und nach Durchfließen des Filtrationsraumes und des Filterkuchens das Waschfluid durch mindestens einen auf der gegenüberliegenden Seite des Filterkuchens angeordneten Kanal oder Filtratkanal aus der Filterkammer abgeführt wird.

Die Erfindung richtet sich weiterhin auf eine Filtervorrichtung umfassend einen in einer Filterkammer zwischen zwei sich gegenüberliegenden Filtertüchern ausgebildeten Filtrationsraum, mindestens einen auf der filtrationsrauminnenseitigen Seite der Filtertücher in den Filtrationsraum einmündenden Zulauf einer Suspensionsleitung, mindestens einen auf der filtrationsrauminnenseitigen Seite der Filtertücher in den Filtrationsraum einmündenden Zulauf einer Waschfluidleitung, vorzugsweise mindestens einen Zulauf einer kombinierten Suspensions-/Waschfluidleitung und auf der filtrationsraumaußenseitigen Seite jedes der Filtertücher mindestens jeweils einen in die Filterkammer einmündenden Filtratkanal.

Schließlich richtet sich die Erfindung auf die Verwendung einer erfindungsgemäßen Filtervorrichtung zur Durchführung eines erfindungsgemäßen Filtrationsverfahrens.

Bei chemischen Produktionsprozessen, insbesondere solchen, die Fällungsreaktionen umfassen, bilden sich gegebenenfalls feststoffhaltige Flüssigkeiten, wie Suspensionen oder Ähnliches aus, die im Verlaufe des Produktionsprozesses einen Filterprozess durchlaufen, in welchem der Feststoff aus der Flüssigkeit, insbesondere Suspension, abgeschieden wird. Hierbei finden Filterpressen, insbesondere auch Membranfilterpressen, Anwendung. Im Rahmen des in der jeweiligen Filterpresse ablaufenden Filtrationsschrittes wird ein Filterkuchen abgeschieden. Soll der Filterkuchen im Rahmen des Produktionsprozesses weiter verwendet werden, sind an diesen häufig besondere Anforderungen zu stellen. Insbesondere hinsichtlich seiner Reinheit werden häufig besondere Ansprüche gestellt. Dies bedeutet, dass gewünscht wird, in dem Filterkuchen möglichst ausschließlich das für die Weiterverarbeitung gewünschte Substrat zurückzuhalten und unerwünschte Begleitelemente, wie beispielsweise Salze, zu beseitigen. Im Rahmen derartiger Filterprozesse ist es daher üblich, den sich bildenden Filterkuchen zu waschen. Bei Filterpressen, beispielsweise Membranfilterpressen, die einen zwischen zwei Filtertüchern ausgebildeten Filtrationsraum umfassen, ist es bekannt, dort die so genannte Spaltwäsche vorzunehmen. Nachdem aus der zugeführten Suspension ein Filterkuchen abgeschieden worden ist, wird eine Waschflüssigkeit in den Filterkuchen eingeleitet und durch diesen hindurchgeleitet. Die Waschflüssigkeit tritt auf der Filtratseite der Filterkammer aus. Mit einem derartigen Verfahren und einer derartigen Filterpresse lassen sich dadurch aus einem Filterkuchen unerwünschte Begleitstoffe, beispielsweise Salze, auswaschen, insbesondere wenn vollentsalztes Wasser als Waschflüssigkeit verwendet wird. Um die unerwünschten Begleitstoffe, beispielsweise Salze, möglichst vollständig auswaschen zu können und die gewünschte Substanz in dem Filterkuchen möglichst hochrein zurückzubehalten, ist es bei dem bekannten Verfahren aber notwendig, mehrfach und mit einem hohen Aufwand an Waschflüssigkeit den Filterkuchen zu durchspülen. Aber auch dann verbleiben immer noch unerwünschte Begleitelemente in einem Mengenanteil in dem Filterkuchen, der in vielen Anwendungsfällen für die Erzeugung eines Filterkuchens aus hochreinem Produkt/Substrat unerwünscht ist. Ein Grund hierfür dürfte darin liegen, dass sich durch die Auswaschung von Begleitelementen, beispielsweise Salzen, in einem ersten Waschprozessschritt in dem Filterkuchen Kanäle an den Stellen bilden, an denen dieses Begleitelement (Salz) ausgespült worden ist. Diese Kanäle verschließen sich bei einem nachfolgenden Waschprozessschritt nicht unbedingt, so dass sich dann bevorzugte Strömungswege innerhalb des Filterkuchens ausbilden, was dazu führt, dass der Filterkuchen nicht gleichmäßig aus- und durchgespült wird. Zur Verbesserung derartiger Verfahren ist es bekannt, in einem nachfolgenden Waschprozess im Rahmen einer sogenannten Diffusions- oder Verdrängungswäsche eine Filterkuchenwäsche vorzunehmen, bei welcher auf einer Seite der Filterkammer und des Filterkuchens eine Waschflüssigkeit in die Filterkammer einströmt und nach Durchströmen des Filterkuchens auf der anderen Seite des Filterkuchens und der Filterkammer wieder aus der Filtratkammer abgeführt wird. Mithilfe dieser Filterkuchenwäsche lässt sich zwar der Gehalt an unerwünschten Begleitelementen, beispielsweise an unerwünschten Salzen, weiter reduzieren. Für die Produktion von hochreinem, d.h. besonders salzarmen Produkten ist aber auch dieses bekannte Verfahren nicht ausreichend. Bei Versuchen in Rahmen der Titandioxidherstellung ließen sich damit die Sulfatgehalte lediglich auf einen Anteil von ca. 0,7 Gew.-% Sulfat absenken. Für manche Anwendungsfälle und Weiterverarbeitungsprozesse des filtrierten Gutes ist ein solcher Sulfatanteil aber noch zu hoch.

Eine Filtervorrichtung, die zur Durchführung derartiger Verfahren verwendet wird, ist beispielsweise in der DE 199 56 617 A1 beschrieben. Auch bei dieser bekannten Filterpresse treten die vorstehend beschriebenen Nachteile auf.

Der Erfindung liegt die Aufgabe zugrunde, eine Lösung zu schaffen, die es ermöglicht, den Auswaschgrad von gebildetem Filterkuchen in Filterpressen zu erhöhen.

Bei einem ersten Filtrationsverfahren der eingangs bezeichneten Art wird dies dadurch erreicht, dass der Waschprozess als Filterkuchenwäsche mit mindestens zwei Waschprozessschritten durchgeführt wird, während welcher der Filterkuchen von dem Waschfluid mit jeweils unterschiedlicher Hauptströmungsrichtung von einem auf der einen oder diesseitigen Seite der Filterkammer angeordneten Kanal oder Filtratkanal zu einem oder mehreren, jeweils auf der anderen oder jenseitigen Seite der Filterkammer angeordneten Kanal oder Filtratkanal oder Filtratkanälen durchströmt wird.

Bei einer Filtervorrichtung der eingangs bezeichneten Art wird diese Aufgabe erfindungsgemäß dadurch gelöst, dass mindestens ein Filtratkanal mit einer Waschfluidzuleitung verbunden und mit Waschfluid, vorzugsweise vollentsalztem Wasser, beaufschlagbar ist.

Ebenso wird die Aufgabe durch die Verwendung einer erfindungsgemäßen Filtervorrichtung zur Durchführung eines erfindungsgemäßen Filtrationsverfahrens gelöst.

Ausgestaltungen und Weiterbildungen der Erfindung ergeben sich aus den jeweiligen abhängigen Unteransprüchen.

Durch die Erfindung ist es nun möglich, nicht nur die so genannte Spaltwäsche, sondern darüber hinaus auch eine Filterkuchenwäsche in Form einer so genannten Diffusionswäsche oder Verdrängungswäsche durchzuführen, welche mindestens zwei Waschprozessschritte mit jeweils unterschiedlicher Hauptströmungsrichtung des Waschfluids von einer Seite der Filterkammer und des Filterkuchens durch den Filterkuchen hindurch zur jeweils gegenüber liegenden Seite des Filterkuchens und der Filterkammer umfasst. Dabei wird der Filterkuchen von einer Seite eines Filtertuches mit einem Waschfluid oder einer Waschflüssigkeit, vorzugsweise einem vollentsalzten Wasser, beaufschlagt. Dieses Waschfluid durchdringt den Filterkuchen und tritt auf der gegenüberliegenden Seite des Filterkuchens durch das Filtertuch wieder aus und wird dann über einen Filtratkanal oder mehrere Filtratkanäle abgeführt. Hierbei ist es auch möglich, die Fließrichtung nach einem Waschprozessschritt zu ändern und den Filterkuchen dann von der gegenüberliegenden Seite mit Waschfluid zu behandeln, d. h. auszuwaschen. Einer "Vorwärts"-Wäsche folgt dann quasi eine "Rückwärts"-Wäsche. Je nach Ausbildung und Anordnung sowie Anzahl an Kanälen und/oder Filtratkanälen ist es möglich, hierbei jeweils horizontal oder vertikal oder diagonal gegenüberliegende Kanäle/Filtratkanäle je nach Wunsch und Anordnung als Waschfluidzuleitung/Waschfluidzulauf oder als Kanal zur Ableitung (Waschfluidablauf) von aus dem Filterkuchen wieder austretendem Waschfluid vorzusehen und zu schalten. Beim Ausführungsbeispiel sind vier Filtratkanäle vorgesehen, die sich jeweils in Eckbereichen von Filterplatten befinden, wovon zwei der Membranseite einer Filterkammer und zwei der Kammerseite einer Filterkammer zugeordnet sind. Jedem Filtratkanal ist ein Ventil zugeordnet, so dass jeder Filterkanal separat geöffnet und geschlossen sowie als Filtratkanal zur Ableitung von Filtrat und/oder Waschfluid oder als Zuleitung zur Zuleitung von Waschfluid/Waschflüssigkeit verwendet werden kann. Hier sind aber eine Vielzahl anderer Alternativen möglich, da es erfindungsgemäß ausreichend ist, wenn die Hauptströmungsrichtung des durch den Filterkuchen hindurch strömenden Waschfluids vom dem mindestens einen zu dem mindestens anderen der mindestens zwei Waschprozessschritte geändert wird. Bei der Durchführung des erfindungsgemäßen Verfahrens durchströmt das Waschfluid den Filterkuchen von der flächigen Filterkuchenseite her. Dies ist unterschiedlich zu der Spaltwäsche, bei welcher seitlich in den sich gebildet habenden Filterkuchen Waschflüssigkeit eingeleitet wird.

Mit der Erfindung werden deutlich verbesserte Auswaschungsgrade unter gleichzeitiger Einsparung von Waschfluid, insbesondere Waschflüssigkeit in Form von vollentsalztem Wasser erreicht. Während es beispielsweise bei Filterkuchen, die durch Herausfiltern von im Rahmen von Fällungsprozessen entstandenen Feststoffpartikeln aus Suspensionen oder Slurrys, die insbesondere im Rahmen der Herstellung von Titandioxidpartikeln oder darauf aufbauend Bleizirkonattitanaten, Zirkoniumtitanathydraten oder Zikoniumtitanaten Verwendung finden, entstehen, mit bekannten Filterpressen und Filtrationsverfahren lediglich möglich ist, den Salzgehalt im Filterkuchen auf beispielsweise 0,7 Gew.-% Sulfat zu senken, ist es mit dem erfindungsgemäßen Verfahren und der erfindungsgemäßen Vorrichtung möglich, den Sulfat-Restgehalt auf 0,3 bis 0,4 Gew.-% oder noch niedrigere Werte zu senken. Dies darüber hinaus in der Hälfte der sonst benötigten Wasch- und/oder Chargenzeit. Darüber hinaus reduziert sich durch das erfindungsgemäße Verfahren und mit Hilfe der erfindungsgemäßen Vorrichtung die zur Erreichung dieses Restsulfatgehaltes notwendige Waschflüssigkeit auf 50 % der üblicherweise benötigten Menge an vollentsalztem Wasser.

Durch die Erfindung wird folglich eine verkürzte Zykluszeit für den Waschprozess und/oder die Waschprozessschritte der Filterkuchenwäsche benötigt, ergibt sich eine Verbesserung hinsichtlich des Restsalzgehaltes in dem Filterkuchen, insbesondere des Restsulfatgehaltes in dem Filterkuchen und ergibt sich eine Verbesserung im Sinne einer Verminderung an benötigtem Waschfluid.

In Ausgestaltung sieht das Filtrationsverfahren in vorteilhafter Weise vor, dass während des Waschprozesses mindestens ein Kanal oder Filtratkanal einer Seite der Filterkammer während der zwei Waschprozessschritte als Waschfluidzulauf geschaltet und/oder beaufschlagt wird und das Waschfluid auf der gegenüberliegenden Seite der Filterkammer in jedem der zwei Waschprozessschritte jeweils durch einen anderen von mindestens zwei Kanälen oder Filtratkanälen abgeführt wird. Durch diese Ausführungsform ist es möglich, die Änderung der Hauptströmungsrichtung dadurch zu erreichen, dass zwar die grundsätzliche Strömungsrichtung von einer Seite zu der anderen Seite bei den beiden Waschprozessschritten aufrecht erhalten wird, aber durch die auf der anderen Seite vorgesehenen unterschiedlichen Waschfluidabläufe die Hauptströmungsrichtung von einem Waschprozessschritt zum anderen geändert wird.

Gemäß einer Ausgestaltung der Erfindung ist es auch möglich, dass während des Waschprozesses mindestens ein Kanal oder Filtratkanal jeder Seite der Filterkammer während des einen der zwei Waschprozessschritte als Waschfluidablauf oder Waschfluidzulauf und in dem anderen der zwei Waschprozessschritte umgekehrt als Waschfluidzulauf oder Waschfluidablauf geschaltet und/oder beaufschlagt wird. Hierdurch ist es möglich, auf jeder Seite einen Kanal oder Filtratkanal vorzusehen, der sowohl als Waschfluidablauf als auch als Waschfluidzulauf geschaltet werden kann und die Änderung der Hauptströmungsrichtung des Waschfluids dadurch zu erreichen, dass von einem Waschprozessschritt zu einem anderen Waschprozessschritt die Strömungsrichtung umgekehrt, also von einer "Vorwärts"-Strömung auf eine "Rückwärts"-Strömung umgeschaltet wird.

Hierbei ist es dann weiterhin zweckmäßig, wenn auf jeder Seite der Filterkammer mindestens ein Kanal oder Filtratkanal als Waschflüssigkeitszulauf und mindestens ein Kanal oder Filtratkanal als Waschfluidablauf geschaltet und/oder beaufschlagt wird, wobei während jedes der beiden Waschprozessschritte jeder der mindestens zwei Kanäle oder Filtratkanäle reziprok jeweils als Waschfluidzulauf oder Waschfluidablauf geschaltet und/oder beaufschlagt wird. Hierdurch lässt sich eine Vereinfachung der für die Durchführung des Verfahrens benötigten Filterpresse oder Filterkammer erreichen, indem lediglich ein Kanal auf jeder Seite der Filterkammer vorgesehen sein muss, der sowohl als Waschfluidzulauf als auch als Waschfluidablauf beaufschlagbar oder geschaltet ist.

In weiterer Ausgestaltung sieht die Erfindung bezüglich des Verfahrens vor, dass der Waschprozess mehrere aufeinander folgende Waschprozessschritte umfasst, wobei in einem, vorzugsweise dem ersten Waschprozessschritt auf der diesseitigen Seite der Filterkammer durch einen ersten Filtratkanal Waschfluid zugeführt und nach Durchfließen des Filterkuchens auf der jenseitigen Seite der Filterkammer durch einen zweiten Filtratkanal aus dieser abgeführt wird. Hierbei kann diesem ersten Waschprozessschritt ein weiterer, vorzugsweise zweiter Waschprozessschritt folgen, bei welchem auf der diesseitigen Seite der Filterkammer durch den ersten Filtratkanal Waschfluid zugeführt und auf der jenseitigen Seite durch einen dritten Fluidkanal abgeführt wird. Diesem Waschprozessschritt kann ein weiterer, vorzugsweise dritter Waschprozess folgen, bei welchem auf der diesseitigen Seite der Filterkammer durch einen vierten Filtratkanal Waschfluid zugeführt und nach Durchfließen des Filterkuchens auf der jenseitigen Seite der Filterkammer durch den zweiten Filtratkanal abgeführt wird. Diesem Waschprozessschritt kann dann ein weiterer, vorzugsweise vierter Waschprozessschritt folgen, bei welchem auf der diesseitigen Seite der Filterkammer durch den vierten Filtratkanal Waschfluid zugeführt und nach Durchfließen des Filterkuchens auf der jenseitigen Seite der Filterkammer durch den dritten Filtratkanal abgeführt wird.

Durch diese Reihenfolge mehrerer nacheinander folgender Waschprozessschritte wird die Strömungsrichtung, insbesondere die Hauptströmungsrichtung, des Waschfluids durch den Filterkuchen bei jedem Schritt geändert, so dass sich dadurch besonders gute, hohe Auswaschgrade des Filterkuchens ergeben. Die Strömungsrichtung wird hierbei insbesondere zwischen vertikal und diagonal geändert.

Da es bei dem erfindungsgemäßen Verfahren und der erfindungsgemäßen Vorrichtung möglich ist, die (Durch-) Strömungsrichtung durch die vorstehend erwähnten vier aufeinander folgenden Waschprozessschritte zu variieren, ist es auch möglich, in einer Membranfilterpresse oder überhaupt einer Filterpresse zwischen den jeweiligen Waschprozessschritten einen Pressschritt durchzuführen, was die Erfindung in Ausgestaltung ebenfalls vorsieht. Hierdurch wird jeweils noch in dem Filterkuchen vorhandene Waschflüssigkeit bzw. vorhandenes Waschfluid ausgepresst, wobei die durch das Ausspülen von Salzen im vorhergehenden Wasch- oder Spülschritt gebildete Kanäle beseitigt werden. Durch die Änderung der Hauptströmungsrichtung ist dennoch eine gleichmäßige Beaufschlagung des Filterkuchens mit Waschflüssigkeit bzw. Spülfluid gewährleistet.

Die vorstehend erwähnten vier Waschprozessschritte der Filterkuchenwäsche können darüber hinaus auch mit einer bekannten Spaltwäsche kombiniert werden, wobei die Spaltwäsche zweckmäßigerweise vorzugsweise vor Durchführung der Filterkuchenwäsche durchgeführt wird.

Die obenstehende Aufgabe wird ferner erfindungsgemäß auch durch ein zweites Filtrationsverfahren der eingangs bezeichneten Art gelöst, bei welchem die Suspension und/oder ein Spaltwaschfluid dem Filtrationsraum durch zwei Suspensionsleitungen mit unterschiedlichen Einströmrichtungen derart zugeführt wird, dass im Filtrationsraum eine kreisförmige Rotationsströmung ausgebildet wird.

Auch durch dieses Verfahren lässt sich bereits der Auswaschgrad des Filterkuchens erhöhen. Dadurch, dass die Suspension und/oder das Spaltwaschfluid in Form einer Zirkulationsströmung oder einer kreisförmigen Rotationsströmung in den Filtrationsraum einströmt/einströmen, wird ein gleichmäßig hoher und gleichmäßig dichter Filterkuchen ausgebildet. Dieser lässt sich besser auswaschen und weist nach einer Spaltwäsche und gegebenenfalls nachfolgender Filterkuchenwäsche niedrigere Gehalte an nicht erwünschten Begleitelementen als bei Filtrationsverfahren nach dem Stand der Technik auf. So lassen sich die vorstehend bereits erwähnten Salz- bzw. Sulfatgehalte bei einem titandioxidhaltigen Material von nach dem Stand der Technik erreichbaren 1,2 bis 1,0 Gew.-% auf 0,7 Gew.-% im Filterkuchen allein durch die Ausbildung der ringförmigen Rotationsströmung bei der Einleitung von Suspension und Spaltwäschefluid absenken.

Von besonderem Vorteil sind die erfindungsgemäßen Filtrationsverfahren gemäß der beiden unabhängigen Verfahrensansprüche und die erfindungsgemäße Filtervorrichtung für das Herausfiltern von besonders feinteiligen Feststoffpartikeln aus einer Suspension oder einer Slurry geeignet. Besonders gut lassen sich damit Feststoffpartikel mit einer mittleren Teilchengröße von $\leq$ 400 nm, insbesondere $\leq$ 50 nm, und/oder mit einer BET-Oberfläche von $\geq$ 20 m$^2$/g, insbesondere $\geq$ 50 m$^2$/g, besonders bevorzugt $\geq$ 100 m$^2$/g und $\leq$ 500 m$^2$/g, insbesondere $\leq$ 400 m$^2$/g, in der Filterkammer abscheiden. Die mittlere Teilchengröße ist dabei durch Berechnung aus der BET-Oberfläche unter Annahme einer monomodalen Korngrößenverteilung von kugelförmigen Partikeln zu ermitteln. Die Beziehung zwischen der mittleren Teilchengröße d und der spezifischen Oberfläche $S_{BET}$ (ermittelt nach BET) ist unter der Voraussetzung einer monomodalen Korngrößenverteilung und kugelförmigen Partikeln durch die Gleichung

$$d_{Partikel} = 6 / \rho \cdot S_{BET}$$

mit $S_{BET}$ in m$^2$/g, $\rho$ = Dichte des Partikels in g/cm$^3$ und d in $\mu$m gegeben. Bei der Herstellung von Titandioxidpartikeln betragen die dabei verwendeten Dichten 3,90 g/cm$^3$ bei Titandioxid als Titanoxidhydrat oder Anatas und 4,26 g/cm$^3$ bei TiO$_2$ als Rutil. Die Bestimmung der BET-Oberfläche erfolgt nach DIN ISO 9277 mittels N$_2$ bei 77 K an einer bei 140 °C während einer Stunde entgasten und getrockneten Probe aus den jeweiligen Partikeln, bei der Titandioxidherstellung den Titandioxidpartikeln. Die Auswertung erfolgt über Mehrpunktbestimmung (10-Punkt-Bestimmung).

Insbesondere sind die beiden erfindungsgemäßen Verfahren sowie die erfindungsgemäße Filtervorrichtung dann besonders vorteilhaft und zweckmäßig anzuwenden, wenn der zu filtrierende feinteilige Feststoffanteil zu mindestes 10 Gew.-% aus Titandioxidpartikeln oder einem titandioxidhaltigen Fäll(ungs)produkt besteht, wobei sich das Filtrationsverfahren insbesondere zur Herstellung von hochreinen Titandioxidpartikeln oder titandioxidhaltigen Partikeln eignet, so dass das Filtrationsverfahren und die Filtervorrichtung als eine Prozessstufe oder im Rahmen einer Prozessstufe eines Verfahrens zur Herstellung von Zirkoniumtitanat und/oder Zirkoniumtitanhydrat und/oder Bleizirkonattitanat mit besonderem Vorteil eingesetzt werden kann.

Die Erfindung ist nachstehend anhand der Zeichnung beispielhaft näher erläutert. Diese zeigt in

Fig. 1    in schematischer Schnittdarstellung einen Teilausschnitt eines oberen Teils einer aus einer Membranplatte und einer Kammerplatte gebildeten Filterkammer im aneinandergepressten Zustand zweier Kombinations(filter)platten,

Fig. 2    die Membranseite einer Filterplatte,

Fig. 3    die Kammerseite einer Filterplatte und in

Fig. 4    in schematischer Darstellung eine leitungsmäßige Verschaltung einer Filterpresse.

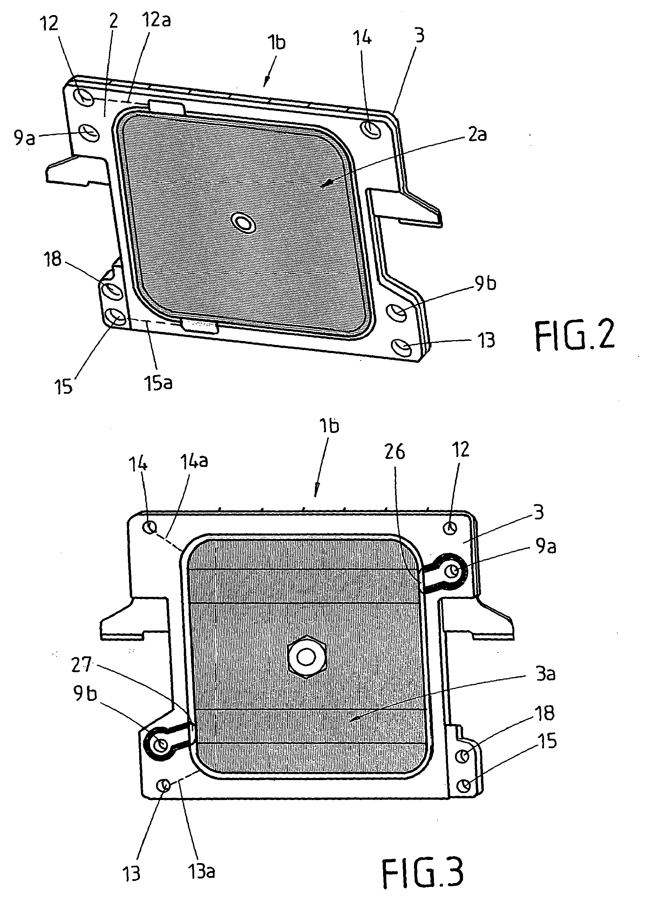

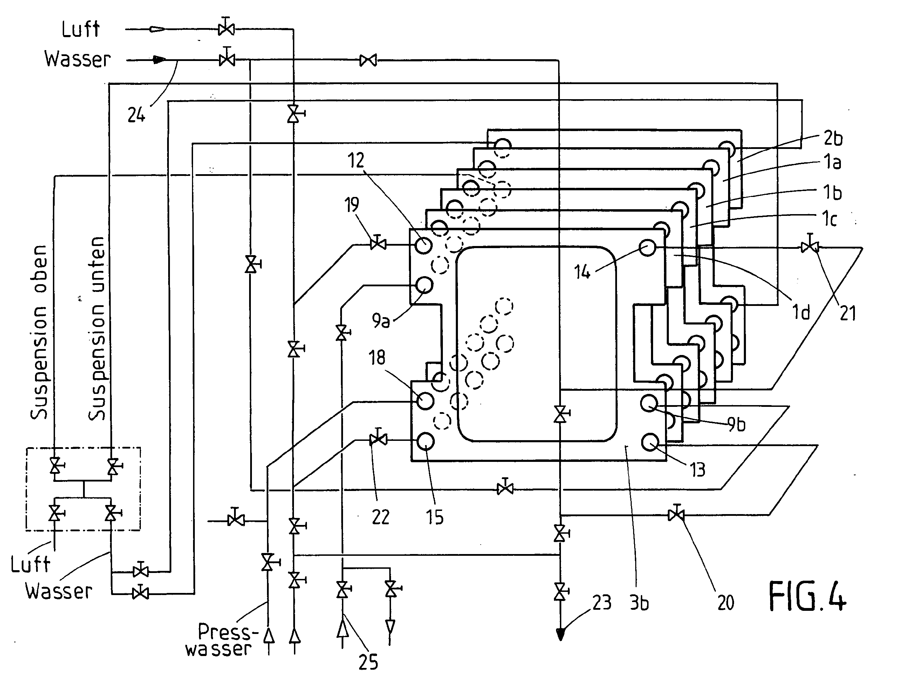

Eine in ihrer Gesamtheit nicht dargestellte Filterpresse besteht aus mehreren Filterplatten, wobei die in der Fig. 4 schematisch ersichtliche Filterpresse aus vier Kombinationsplatten 1a, 1b, 1c, 1d besteht, die jeweils auf einer Seite als Membranplatte 2 und auf einer Seite als Kammerplatte 3 ausgebildet sind. Die Figuren 2 und 3 zeigen die Kombinationsplatte 1b, wobei die Fig. 2 eine perspektivische Aufsicht auf die Membranseite 2a und die Darstellung der Fig. 3 eine perspektivische Aufsicht auf die Kammerseite 3a zeigt. Das Ende der in Fig. 4 dargestellten Anordnung von Filterplatten bildet eine Endplatte 2b, die lediglich eine Membranplatte bzw.

Membranseite 2a umfasst. Der Anfang der Filterpresse wird von einer Kopfplatte 3b gebildet, die lediglich eine Kammerplatte bzw. Kammerseite 3a umfasst.

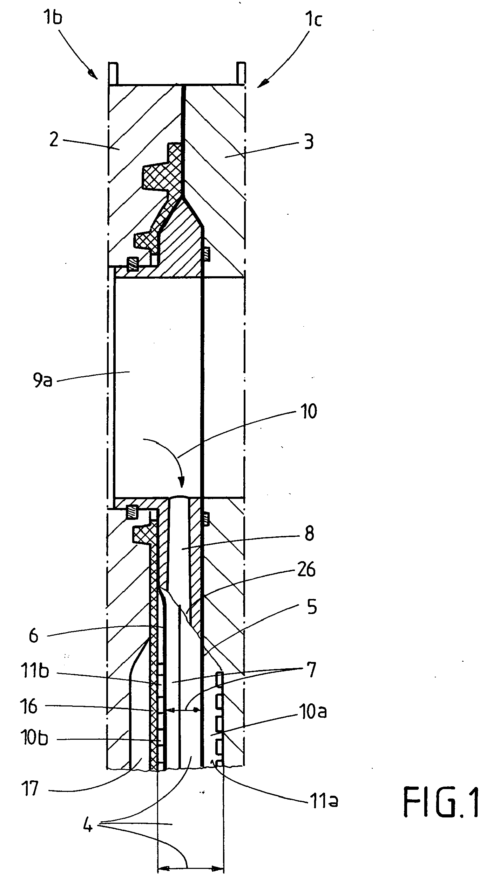

Die in der Fig. 1 in aneinandergepresstem Zustand dargestellte Membranplatte 2 und Kammerplatte 3 weisen auf ihrer Rückseite auf der strichpunktiert gezeichneten Linie aufliegend die jeweilige Gegenplatte, d. h. eine Membranplatte 2 im Falle der Kammerplatte 3 und eine Kammerplatte 3 im Falle der Membranplatte 2 zur Vervollständigung der Kombinationsplatten 1b, 1c auf, wobei die jeweiligen Gegenplatten aber nicht dargestellt sind. Durch die beiden aneinanderliegenden Membranplatte 2 und Kammerplatte 3 wird zwischen der Kammerseite 3a und der Membranseite 2a eine Filterkammer 4 ausgebildet. In der Filterkammer 4 ist zwischen zwei Filtertüchern 5 und 6, wobei das Filtertuch 5 an der Kammerplatte 3 angeordnet ist und das Filtertuch 6 an der Membranplatte 2 angeordnet ist, ein Filtrationsraum 7 ausgebildet. Durch einen Zulauf 8 einer kombinierten Suspensions-/Waschfluidleitung 9 ist in Richtung des Pfeiles 10 in den Filtrationsraum 7 und damit in die Filterkammer 4 eine feinteilige Feststoffpartikel aufweisende Suspension einleitbar. Diese bildet auf der den Filtrationsraum 7 begrenzenden Seite der Filtertücher 5, 6 im Laufe des Filtrationsverfahrens einen nicht dargestellten Filterkuchen aus. Auf jeder der dem Filterkuchen und dem jeweiligen Filtertuch 5, 6 abgewandten Seite 10a, 10b der Filterkammer 4 tritt während des Filtrationsprozesses Filtrat in den Filtraraum 11a der Kammerplatte 3 und den Filtraraum 11b der Membranplatte 2 aus. Aus dem jeweiligen Filtraraum 11a, 11b kann das Filtrat dann in mindestens einen der angeschlossenen Filtratkanäle 12, 13, 14 oder 15 ausfließen, wobei an den Filtraraum 11a die Filtratkanäle 13 und 14 und an den Filtraraum 11b die Filtratkanäle 12, 15 angeschlossen sind.

Die Membranplatte 2 weist eine darin angeordnete Membran 16 auf, die an deren vom Filterkuchen abgewandten Seite einen Druckmittelraum 17 aufweist, in den mittels eines Pressmittelkanals 18 ein Druck- oder Pressmittel, insbesondere Presswasser, mit erhöhtem oder hohem Druck, einführbar ist. Nach Einführen von unter Druck stehendem Presswasser in den Druckmittelraum 17 verformt sich die Membran 16 zum Filtrationsraum 7 hin, so dass ein darin befindlicher Filterkuchen gegen das gegenüberliegende Filtertuch 5, das gegebenenfalls in Anlage an den muldenförmig ausgebildeten Filtraraum 11a bringbar ist, gepresst werden kann, so dass darin noch befindliche Flüssigkeit oder Fluid in die Filtraräume 11a und 11b ausgepresst wird.

Im (geschlossenen) Filter- oder Filtrationszustand der Filterpresse werden die verschiedenen Kombinationsplatten 1a, 1b, 1c, 1d sowie die Kopfplatte 3b und die Endplatte 2b mit Hilfe einer hydraulischen Schließeinrichtung aneinander gepresst, so dass sich die in den einzelnen Platten jeweils lediglich als Bohrung dargestellten Öffnungen durch das Aneinanderliegen der einzelnen Platten zu den jeweiligen Filtratkanälen 12, 13, 14, 15, der Suspensions-/Waschfluidleitung 9a, 9b sowie den Pressmittelkanal 28 zusammenfügen und dabei jeweils eine durchgehende Leitung ausbilden. An der Kopfplatte 3b sind entsprechende Leitungen angeflanscht, mit welchen das jeweilige Medium aus der Filterpresse heraus oder zu dieser hin geführt werden kann.

Wie aus der Fig. 4 ersichtlich ist, ist jedem der Filtratkanäle 12, 13, 14, 15 ein Ventil 19, 20, 21, 22 zugeordnet, mit welchem sich die jeweils angeschlossene Zuleitung öffnen und schließen lässt. Es ist also möglich, jeden Filtratkanal 12 bis 15 getrennt und unabhängig zu den jeweiligen anderen Filtratkanälen 12 bis 15 in eine Öffnungs- oder Schließstellung zu bringen. Und zwar ist hierzu dem Filtratkanal 12 das Ventil 19, dem Filtratkanal 13 das Ventil 20, dem Filtratkanal 14 das Ventil 21 und dem Filtratkanal 15 das Ventil 22 zugeordnet. Ferner ist es mit Hilfe weiterer Ventile möglich, das während des Filtrationsprozesses gebildete Filtrat aus der Filterpresse abzuleiten (Abfluss 23). Es ist aber auch möglich, diesen Leitungen über eine Wasserleitung 24 vollentsalztes Wasser als Waschfluid bzw. Waschflüssigkeit zuzuführen. Während des Betriebes der Filterpresse im Filtrationsprozess ist die Stellung der Ventile üblicherweise so gewählt, dass die Ventile 19 bis 22 alle geöffnet sind, so dass die über die Suspensionsleitung 25 zugeführte Suspension durch die Suspensions-/Waschflüssigkeits- oder Waschfluidleitungen 9a, 9b und die Zuläufe 26, 27 in den Filtrationsraum 7 einfließt und dann unter Ausbildung eines Filterkuchens in dem Filtrationsraum 7 Filtrat in die Filtraräume 11a, 11b austritt, das durch alle vier Filtratkanäle 12 bis 15 aus den Filtraräumen 11a und 11b abfließt. Dabei sind die Verbindungen so ausgebildet, dass die Filtratkanäle 12 und 15, wie durch gestrichelte Linien 12a und 15a angedeutet, mit der Membranseite 2a in Leitungsverbindung stehen und die Filtratkanäle 13 und 14, wie durch gestrichelte Linien 13a und 14a angedeutet, mit der Kammerseite 3a der jeweiligen Membranplatte 2 oder Kammerplatte 3 in Leitungsverbindung stehen.

Bei Durchführung einer so genannten Spaltwäsche wird der Suspensionsleitung 25 bzw. den kombinierten Suspensions-/Waschflüssigkeitsleitungen 9a, 9b ausgehend von der Waschwasserleitung 24 Waschfluid zugeführt, welches dann ebenfalls durch alle vier Filtratkanäle 12 bis 15 abgeführt wird.

Soll bei einem Waschprozess bzw. Waschprozessschritt des Filterkuchens nun die Filterkuchenwäsche durchgeführt werden, so wird sowohl auf der Membranseite 2a als auch auf der Kammerseite 3a jeweils eines der zugeordneten Ventile 19, 22 bzw. 20, 21 geschlossen. Von den verbleibenden beiden offenen Ventilen wird durch entsprechende Ventilschaltung eine Leitung an die Waschflüssigkeitsleitung 24 angeschlossen, so dass durch einen Filtratkanal, beispielsweise den Filtratkanal 12, der dann einen Waschflüssigkeits- oder Waschfluidzulauf ausbildet, Waschflüssigkeit bzw. Waschfluid in den Filtraraum 11b einfließt. Diese Waschflüssigkeit durchfließt das Filtertuch 6, den Filtrationsraum und den Filterkuchen und tritt auf der jenseitigen Seite 10 des Filtrationsraumes 7 nach Durchfließen des Filtertuches 5 in den Filtratraum 11a aus und fließt dann durch den anderen, noch offenen Filtratkanal, beispielsweise den Filtratkanal 13, der dann einen Waschfluidablauf ausbildet, aus der Filterkammer 4 ab. Anschließend kann eine geänderte Ventilstellung vorgenommen werden, indem beispielsweise zwei andere Ventile geschlossen werden und eine andere Leitung an die Waschflüssigkeitsleitung angeschlossen wird, so dass ein anderer verbleibender Filtratkanal zur Ableitung des den Filterkuchen durchströmt habenden Waschfluids dient. Jeder der Filtratkanäle 12 bis 15 kann somit einen ersten Filtratkanal, einen zweiten Filtratkanal, einen dritten Filtratkanal und einen vierten Filtratkanal im Sinne der Patentansprüche 5 bis 8 ausbilden. Im nachfolgend beschriebenen Ausführungsbeispiel wird der Filtratkanal 12 als erster Filtratkanal bezeichnet, der Filtratkanal 13 als zweiter Filtratkanal, der Filtratkanal 14 als dritter Filtratkanal und der Filtratkanal 15 als vierter Filtratkanal bezeichnet. Es sind aufgrund der vorgesehenen Ventil- und Leitungsanordnung sowie den Schaltungsmöglichkeiten Durchflussrichtungen sowohl von der Membranseite 2a zur Kammerseite 3a als auch von der Kammerseite 3a zur Membranseite 2a und sowohl von dem jeweiligen unteren Filtratkanal 13, 15 zu dem auf der gegenüberliegenden Filterkammerseite befindlichen oberen Filterkanal 12, 14 als auch jeweils zu dem auf der gegenüberliegenden Seite befindlichen unteren Filterkanal 13 bzw. 15 möglich. Es ist auch möglich, auf einer Seite (Zufluss- oder Abflussseite) lediglich einen Filtratkanal geöffnet zu halten und auf der gegenüberliegenden anderen Seite beide Filtratkanäle geöffnet zu halten. Möglich sind also alle denkbaren Kombinationsmöglichkeiten, wobei auch abwechselnd eine Vorwärtswäsche und eine Rückwärtswäsche durchgeführt werden kann, also zunächst von beispielsweise der Kammerseite 3a zur Membranseite 2a und dann anschließend von der Membranseite 2a zur Kammerseite 3a gespült oder gewaschen wird.

Die in den Filtrationsraum 7 einmündenden Zulauföffnungen 26, 27 (Fig. 3) der kombinierten Suspensions-/Waschflüssigkeitsleitungen 9a, 9b sind so angeordnet und ausgerichtet, dass in dem Filtrationsraum 7 eine ringförmige Rotationsströmung ausgebildet wird. Dies führt zu einer gleichmäßigen Ablagerung der Feststoffpartikel auf den Filtertüchern 5, 6.

Bei den Filtertüchern handelt es sich um Tücher, die aus einem Gewebe aus Polypropylen bestehen und mit einer Membran aus Polyurethan beschichtet sind. Aber auch Filtertücher ähnlicher Aufbauart, d. h. mit einem unterschiedlichen Gewebe, aber ebenfalls mit einer Polyurethanmembran beschichtet, können Anwendung finden.

Mit der erfindungsgemäßen Filtervorrichtung und den erfindungsgemäßen Filtrationsverfahren lässt sich beispielsweise hochreines Titandioxid zur anschließenden Herstellung von Zirkoniumtitanat, Zirkoniumtitanhydrat oder Bleizirkonattitanat herstellen. Ein solches Verfahren zur Herstellung von hochreinen (möglichst von wasserlöslichen Salzen freien) Titandioxiden und titandioxidhaltigen Fällungsprodukten umfasst beispielsweise die Schritte Präparation, Fällung, Filtration. Hierbei werden die Produkte ggf. in ihrem pH-Wert eingestellt und je nach weiterer Verwendung des erhaltenen Titandioxids gegebenenfalls durch Zudosierung von Zirkon-Salzen eingestellt. Die erhaltene Suspension wird der Filterpresse durch die kombinierten Suspensions-/Waschflüssigkeitsleitungen 9a, 9b zugeführt, wobei während dieses Prozessschrittes alle Filtratkanäle 12 bis 15 offen sind, so dass gleichmäßig Filtrat aus den Filtraträumen 11a, 11b ablaufen kann. In dem Filtrationsraum 7 bildet sich dann ein Filterkuchen aus. Nachdem sich der Filtrationsraum 7 mit Filterkuchen gefüllt hat, wird durch Zuleitung von Waschflüssigkeit in die Suspensions-/Waschflüssigkeitsleitungen 9a, 9b dem Filtrationsraum 7 Waschflüssigkeit zugeführt und eine so genannte Spaltwäsche durchgeführt. Nach Abschluss der Spaltwäsche erfolgt ein erster Pressvorgang, bei welchem die Membran 16 mit einem Druck von ca. 3 bis 4 bar beaufschlagt wird. Nach Abschluss dieses ersten Pressschrittes wird der gepresste Filterkuchen einer Filterkuchenwäsche unterzogen. Hierbei wird in einem ersten Waschprozessschritt durch den Filtratkanal 12 als erstem Filtratkanal Waschfluid zugeführt und durch den Filtratkanal 13 als zweitem Filtratkanal abgeführt. Die beiden anderen Filtratkanäle 14 und 15 sind mittels der Ventile 21 und 22 verschlossen. Danach wird in einem zweiten Waschprozessschritt durch den Filtratkanal 12 als erstem Filtratkanal Waschfluid zugeführt und über den Filtratkanal 14 als drittem Fluidkanal abgeführt. Hierbei sind die Filtratkanäle 13 und 15 mittels der Ventile 20 und 22 verschlossen. In einem nächsten Waschprozessschritt, dem dritten Waschprozessschritt, wird dann durch den Filtratkanal 15 als viertem Filtratkanal Waschfluid zugeführt und durch den Filtratkanal 13 als zweitem Filtratkanal abgeführt. Hierbei bleiben die Filtratkanäle 12 und 14 mittels der Ventile 19 und 21 verschlossen. Schließlich wird dann in einem vierten Waschprozessschritt durch den Filtratkanal 15 als viertem Filtratkanal Waschfluid zugeführt und durch den Filtratkanal 14 als drittem Filtratkanal abgeführt, wobei die Filtratkanäle 12 und 13 mittels der Ventile 19 und 20 verschlossen bleiben.

Danach erfolgt ein weiterer Pressschritt, nun mit einem Pressdruck von ca. 8 bar, woraufhin sich dann eine weitere Filterkuchenwäsche mit den vorstehenden vier Waschprozessschritten wiederum anschließt. Nach den vier Waschprozessschritten folgt dann wiederum ein Pressschritt, nun mit einem Druck von ca. 10 bar. Nachdem vorhergehend zwei Sequenzen von vier Waschprozessschritten zur Durchführung einer Filterkuchenwäsche in der so genannten Vorwärtsrichtung von der Membranseite zur Kammerseite durchgeführt worden ist, folgt nun eine Rückwärtswäsche von der Kammerseite zur Membranseite. Hierbei wird nun in einem fünften Waschprozessschritt durch den Filtratkanal 14 als drittem Kanal Waschfluid zugeführt und durch den Filtratkanal 12 als erstem Kanal abgeführt. In einem sechsten Waschprozessschritt wird dann durch den Filtratkanal 14 als drittem Kanal Waschfluid zugeführt und durch den Filtratkanal 15 als viertem Kanal abgeführt. In einem nachfolgenden siebten Waschprozessschritt wird durch den Filtratkanal 13 als zweitem Kanal Waschfluid zugeführt und durch den Filtratkanal 15 als viertem Kanal abgeführt. Schließlich wird in einem achten Waschprozessschritt durch den Filtratkanal 13 als zweitem Kanal Waschfluid zugeführt und durch den Filtratkanal 12 als erstem Kanal abgeführt. Daran schließt sich ein weiterer Pressschritt, nunmehr mit einem Pressdruck von ca. 12 bar an. Daraufhin erfolgt ein zweites Rückwärtswaschen, bei welchem sich die vorstehenden Prozessschritte vom fünften bis zum achten Waschprozessschritt wiederholen. Abgeschlossen wird der Filtrationsschritt bzw. Waschprozess durch ein abschließendes Pressen bei einem Druck von ca. 14 bis 16 bar.

Danach werden die Pressenplatten bzw. Filterplatten (Kombinationsplatten 1a, 1b, 1c, 1d, Membranplatte 2 und Kammerplatte 3) auseinander gefahren und der Filterkuchen wird anschließend gegebenenfalls einer weiteren Trocknung unterzogen, danach in einer geeigneten Flüssigkeit wieder resuspendiert bzw. dispergiert und anschließend zum Erhalt der gewünschten Feststoffpartikel einem weiteren Trocknungsverfahren unterworfen.

Auch wenn vorstehend eine bestimmte Reihenfolge von Prozessschritten beschrieben ist, so liegen im Rahmen der Erfindung alle Kombinationsmöglichkeiten von beschriebenen einzelnen Prozessschritten, Pressschritten, Waschprozessschritten und sowie Waschprozess- und Waschschritten, sofern lediglich ein Teilschritt als Filterkuchenwäsche ausgeführt wird, bei welchem auf einer Seite des Filterkuchens diesem und der Filterkammer 4 ein Waschfluid zugeführt und auf der gegenüberliegenden Seite des Filterkuchens und der Filterkammer 4 aus dieser abgeleitet wird und im Rahmen der Filterkuchenwäsche zwei Waschprozessschritte mit unterschiedlicher, differierender Hauptströmungsrichtung des Waschfluids bzw. der Waschflüssigkeit im Filterkuchen durchgeführt werden und/oder sofern lediglich die Suspension und/oder das Spaltwäschefluid unter Ausbildung einer Zirkulationsströmung oder einer ringförmigen Rotationsströmung in den Filtrationsraum 7 ein sowie anschließend in diesem strömt.

Neben der beschriebenen Filterkuchenwäsche ist auch die Einleitung der Suspension in den Filtrationsraum 7 zum Erhalt des Filterkuchens bei dem/den erfindungsgemäßen Verfahren bzw. der erfindungsgemäßen Filtervorrichtung von Bedeutung. Dadurch, dass die Zulauföffnungen 26, 27 der kombinierten Suspensions-/Waschfluidleitungen 9a, 9b mit unterschiedlicher oder gerichteter und gezielter Ausrichtung in den Filtrationsraum 7 einmünden, bildet sich in dem Filtrationsraum 7 zunächst eine kreisförmige Rotationsströmung aus. Dies führt zu einer gleichmäßigen Ablagerung des Filterkuchens über die gesamte Filterkuchenfläche. Außerdem bildet sich diese ringförmige Rotationsströmung auch bei der Durchführung der Spaltwäsche aus, da die Waschflüssigkeit/das Waschfluid durch dieselben Zulauföffnungen 26, 27 zugeführt wird. Dies führt dazu, dass bei der Spaltwäsche der Filterkuchen ebenfalls im Sinne einer ringförmigen Rotationsbewegung zumindest oberflächlich in der Ebene der Waschflüssigkeitszulauföffnungen oder Waschfluidzulauföffnungen 26, 27 bewegt wird. Hierdurch werden Kapillare, die sich durch aus dem Filterkuchen ausgewaschene Salze gebildet haben, wieder verschlossen. Es bildet sich keine bevorzugte, sondern eine gleichmäßige Durchströmung des Filterkuchens mit der Waschflüssigkeit aus. Diese Spaltwäsche wird durchgeführt, bis ca. 80 Gew.-% der ursprünglich insgesamt im Filterkuchen enthaltenen Salze ausgewaschen sind. Später folgt dann eine/die Filterkuchenwäsche.

Unter "Filtertuch" werden im Sinne der vorliegenden Erfindung nicht nur textile Gewebe oder Gewirke, sondern auch nicht textile Gewebe oder Gewirke sowie dünne Platten, beispielsweise aus Kunststoff oder Metall, oder siebartige Gebilde oder (teil-)durchlässige Membranen verstanden, die die Ablagerung eines Filterkuchens auf einer Seite und den Austritt von Filtrat auf der gegenüberliegenden Seite ermöglichen.

**Patentansprüche**

1. Filtrationsverfahren, bei welchem eine einen, vorzugsweise feinteiligen, Feststoffanteil aufweisende Suspension einem in einer Filterkammer (4) zwischen zwei gegenüberliegenden Filtertüchern (5, 6) ausgebildeten Filtrationsraum (7) zugeführt wird, in dem Filtrationsraum (7) auf den Filtertüchern (5, 6) der Feststoffanteil der Suspension unter Ausbildung eines Filterkuchens abgeschieden und das durch die Filtertücher (5, 6) hindurch getretene Filtrat mittels mindestens jeweils eines auf der filterkuchenabgewandten Seite (10a, 10b) der Filtertücher (5, 6) mit der Filterkammer (4) verbundenen Filtratkanals (12, 13, 14, 15) aus der Filterkammer (4) abgeführt wird sowie der Filterkuchen nachfolgend in dem Filtrationsraum (7) einem Waschprozess mit Waschfluid, vorzugsweise vollentsalztem Wasser, unterworfen wird, bei welchem Waschprozess durch mindestens einen mit einer diesseitigen Seite der Filterkammer (4) verbundenen Kanal Waschfluid in die Filterkammer (4) eingeleitet und nach Durchfließen des Filtrationsraumes (7) und des Filterkuchens das Waschfluid durch mindestens einen auf der gegenüberliegenden Seite des Filterkuchens und der Filterkammer (4) angeordneten Kanal oder Filtratkanal (12, 13, 14, 15) aus der Filterkammer (4) abgeführt wird, **dadurch gekennzeichnet, dass** der Waschprozess als Filterkuchenwäsche mit mindestens zwei Waschprozessschritten durchgeführt wird, während welcher der Filterkuchen von dem Waschfluid mit jeweils unterschiedlicher Hauptströmungsrichtung von einem auf der einen oder diesseitigen Seite der Filterkammer (4) angeordneten Kanal oder Filtratkanal (12, 15) zu einem oder mehreren jeweils auf der anderen oder jenseitigen Seite der Filterkammer angeordneten Kanal oder Filtratkanal oder Filtratkanälen (13, 14) durchströmt wird.

2. Filtrationsverfahren nach Anspruch 1, **dadurch gekennzeichnet, dass** während des Waschprozesses mindestens ein Kanal oder Filtratkanal (12, 13, 14, 15) einer Seite der Filterkammer (4) während der zwei Waschprozessschritte als Waschfluidzulauf geschaltet und/oder beaufschlagt wird und das Waschfluid auf der gegenüberliegenden Seite der Filtratkammer (4) in jedem der zwei Waschprozessschritte jeweils durch einen anderen von mindestens zwei Kanälen oder Filtratkanälen (12, 13, 14, 15) abgeführt wird.

3. Filtrationsverfahren nach Anspruch 1 oder 2, **dadurch gekennzeichnet, dass** während des Waschprozesses mindestens ein Kanal oder Filtratkanal (12, 15; 13, 14) jeder Seite der Filterkammer (4) während des einen der zwei Waschprozessschritte als Waschfluidablauf oder Waschfluidzulauf und in dem anderen der zwei Waschprozessschritte umgekehrt als Waschfluidzulauf oder Waschfluidablauf geschaltet und/oder beaufschlagt wird.

4. Filtrationsverfahren nach einem der vorhergehenden Ansprüche, **dadurch gekennzeichnet, dass** auf jeder Seite der Filterkammer (4) mindestens ein Kanal oder Filtratkanal (12, 15; 13, 14) als Waschfluidzulauf und mindestens ein Kanal oder Filtratkanal (12, 15; 13, 14) als Waschfluidablauf geschaltet und/oder beaufschlagt wird, wobei während jedes der beiden Waschprozessschritte jeder der mindestens zwei Kanäle oder Filtratkanäle (12, 15; 13, 14) reziprok jeweils als Waschfluidzulauf oder Waschfluidablauf geschaltet und/oder beaufschlagt wird.

5. Filtrationsverfahren nach einem der vorhergehenden Ansprüche, **dadurch gekennzeichnet, dass** der Waschprozess mehrere aufeinander folgende Waschprozessschritte umfasst, wobei in einem, vorzugsweise dem ersten Waschprozessschritt auf der diesseitigen Seite (10b) der Filterkammer (4) durch einen ersten Filtratkanal (12) Waschfluid zugeführt und nach Durchfließen des Filterkuchens auf der jenseitigen Seite (10a) der Filterkammer (4) durch einen zweiten Filtratkanal (13) aus dieser abgeführt wird.

6. Filtrationsverfahren nach einem der vorhergehenden Ansprüche, **dadurch gekennzeichnet, dass** der Waschprozess mehrere aufeinander folgende Waschprozessschritte umfasst, wobei in einem, vorzugsweise dem zweiten Waschprozessschritt auf der diesseitigen Seite (10b) der Filterkammer (4) durch den ersten Filtratkanal (12) Waschfluid zugeführt und auf der jenseitigen Seite (10a) durch einen dritten Fluidkanal (14) abgeführt wird.

7. Filtrationsverfahren nach einem der vorhergehenden Ansprüche, **dadurch gekennzeichnet, dass** der Waschprozess mehrere aufeinander folgende Waschprozessschritte umfasst, wobei in einem, vorzugsweise dem dritten Waschprozessschritt auf der diesseitigen Seite (10b) der Filterkammer (4) durch einen vierten Filtratkanal (15) Waschfluid zugeführt und nach Durchfließen des Filterkuchens auf der jenseitigen Seite (10a) der Filterkammer (4) durch den zweiten Filtratkanal (13) abgeführt wird.

8. Filtrationsverfahren nach einem der vorhergehenden Ansprüche, **dadurch gekennzeichnet, dass** der Waschprozess mehrere aufeinander folgende Waschprozessschritte umfasst, wobei in einem, vorzugsweise dem vierten Waschprozessschritt auf der diesseitigen Seite (10b) der Filterkammer (4) durch den vierten Filtratkanal (15) Waschfluid zugeführt und nach Durchfließen des Filterkuchens auf der jenseitigen Seite (10a) der Filterkammer (4) durch den dritten Filtratkanal (14) abgeführt wird.

9. Filtrationsverfahren nach einem der vorhergehenden Ansprüche, **dadurch gekennzeichnet, dass** zwischen den Waschprozessschritten, insbesondere zwischen dem ersten und/oder zweiten, dem zweiten und/oder dritten und/oder dem dritten und/oder vierten Waschprozessschritt ein Pressschritt durchgeführt wird.

10. Filtrationsverfahren nach Anspruch 9, **dadurch gekennzeichnet, dass** der Pressdruck vom ersten zu dem oder den nachfolgenden Waschprozessschritt(en) ansteigt.

11. Filtrationsverfahren nach einem der vorhergehenden Ansprüche, **dadurch gekennzeichnet, dass** das Verfahren in einer Membranfilterpresse durchgeführt wird und die diesseitige Seite (10b) der Filterkammer (4) als Membranseite (2a) und die jenseitige Seite (10a) der Filterkammer (4) als Kammerseite (3a) ausgebildet wird.

12. Filtrationsverfahren nach einem der vorhergehenden Ansprüche, **dadurch gekennzeichnet, dass** in einem nachfolgenden Waschprozessschritt auf der jenseitigen Seite (10a) der Filterkammer (4), vorzugsweise durch den zweiten und/oder dritten Filterkanal (13, 14), Waschfluid zugeführt und auf der diesseitigen Seite (10b) der Filterkammer (4), vorzugsweise durch den ersten und/oder vierten Filtratkanal (12, 15), Waschfluid abgeführt wird.

**13.** Filtrationsverfahren nach einem der vorhergehenden Ansprüche, **dadurch gekennzeichnet, dass** es eine Spaltwäsche umfasst, bei welcher ein Waschfluid dem Filtrationsraum (7) durch Suspensionsleitungen (9a, 9b) zugeführt und durch mindestens einen Filtratkanal (12, 13, 14, 15) abgeführt wird.

**14.** Filtrationsverfahren nach Anspruch 13, **dadurch gekennzeichnet, dass** die Spaltwäsche dem Waschprozess der Filterkuchenwäsche vorhergeht.

**15.** Filtrationsverfahren nach einem der vorhergehenden Ansprüche, **dadurch gekennzeichnet, dass** die Suspension und/oder das Spaltwaschfluid dem Filtrationsraum (7) durch zwei Suspensionsleitungen (9a, 9b) mit unterschiedlichen Einströmrichtungen derart zugeführt wird, dass im Filtrationsraum (7) eine kreisförmige Rotationsströmung ausgebildet wird.

**16.** Filtrationsverfahren nach einem der vorhergehenden Ansprüche, **dadurch gekennzeichnet, dass** in dem Filtrationsraum (7) feinteilige Feststoffpartikel mit einer mittleren Teilchengröße von $\leq 400$ nm, insbesondere $\leq 50$ nm, und/oder einer BET-Oberfläche von $\geq 20$ m$^2$/g, insbesondere $\geq 50$ m$^2$/g, besonders bevorzugt $\geq 100$ m$^2$/g, und $\leq 500$ m$^2$/g, insbesondere $\leq 400$ m$^2$/g, abgeschieden werden.

**17.** Filtrationsverfahren nach einem der vorhergehenden Ansprüche, **dadurch gekennzeichnet, dass** der feinteilige Feststoffanteil zumindest aus Titandioxidpartikeln oder einem titandioxidhaltigen Fällungsprodukt besteht.

**18.** Filtrationsverfahren nach einem der vorhergehenden Ansprüche, **dadurch gekennzeichnet, dass** das Filtrationsverfahren als eine Prozessstufe eines Verfahrens zur Herstellung von Zirkoniumtitanat und/oder Zirkoniumtitanhydrat und/oder Bleizirkonattitanat eingesetzt wird.

**19.** Filtrationsverfahren, bei welchem eine einen, vorzugsweise feinteiligen, Feststoffanteil aufweisende Suspension einem in einer Filterkammer (4) zwischen zwei gegenüberliegenden Filtertüchern (5, 6) ausgebildeten Filtrationsraum (7) zugeführt wird, in dem Filtrationsraum (7) auf den Filtertüchern (5, 6) der Feststoffanteil der Suspension unter Ausbildung eines Filterkuchens abgeschieden und das durch die Filtertücher (5, 6) hindurch getretene Filtrat mittels mindestens jeweils eines auf der filterkuchenabgewandten Seite (10a, 10b) der Filtertücher (5, 6) mit der Filterkammer (4) verbundenen Filtratkanals (12, 13, 14, 15) aus der Filterkammer (4) abgeführt wird sowie der Filterkuchen nachfolgend in dem Filtrationsraum (7) einem Waschprozess mit Waschfluid, vorzugsweise vollentsalztem Wasser, unterworfen wird, bei welchem durch mindestens einen Kanal Waschfluid in den Filtrationsraum (7) eingeleitet und nach Durchfließen des Filtrationsraumes (7) und des Filterkuchens das Waschfluid durch mindestens einen auf der gegenüberliegenden Seite des Filterkuchens angeordneten Kanal oder Filtratkanal (12, 13, 14, 15) aus der Filterkammer (4) abgeführt wird, **dadurch gekennzeichnet,**
**dass** die Suspension und/oder ein Spaltwaschfluid dem Filtrationsraum (7) durch zwei Suspensionsleitungen (9a, 9b) mit unterschiedlichen Einströmrichtungen derart zugeführt wird, dass im Filtrationsraum (7) eine kreisförmige Rotationsströmung ausgebildet wird.

**20.** Filtervorrichtung umfassend einen in einer Filterkammer (4) zwischen zwei sich gegenüberliegenden Filtertüchern (5, 6) ausgebildeten Filtrationsraum (7),
mindestens einen auf der filtrationsrauminnenseitigen Seite der Filtertücher (5, 6) in den Filtrationsraum (7) einmündenden Zulauf (26, 27) einer Suspensionsleitung (9a, 9b),
mindestens einen auf der filtrationsrauminnenseitigen Seite der Filtertücher in den Filtrationsraum einmündenden Zulauf einer Waschfluidleitung, vorzugsweise mindestens einen Zulauf (26, 27) einer kombinierten Suspensions-/Waschfluidleitung (9a, 9b) und auf der filtrationsraumaußenseitigen Seite (10a, 10b) jedes der Filtertücher (5, 6) mindestens jeweils einen in die Filterkammer (4) einmündenden Filtratkanal (12, 15; 13, 14),
**dadurch gekennzeichnet,**
**dass** mindestens ein Filtratkanal (12, 13, 14, 15) mit einer Waschfluidzuleitung (24) verbunden und mit Waschfluid, vorzugsweise vollentsalztem Wasser, beaufschlagbar ist.

**21.** Filtervorrichtung nach Anspruch 20, **dadurch gekennzeichnet, dass** jeder filtrationsraumaußenseitigen Seite (10a, 10b) der Filterkammer (4) zwei darin einmündende und jeweils mit Waschfluid beaufschlagbare Filtratkanäle (12, 15; 13, 14) zugeordnet sind.

**22.** Filtervorrichtung nach Anspruch 20 oder 21, **dadurch gekennzeichnet, dass** die Filterkammer (4) Bestandteil einer Filterpresse, insbesondere einer Membranfilterpresse, ist.

**23.** Filtervorrichtung nach Anspruch 22, **dadurch gekennzeichnet, dass** die Filterpresse den Filtratkanälen (12, 13, 14, 15) Waschfluid zuführende Waschfluidzuleitungen mit zugeordneten Ventilen (19, 20, 21, 22) und/oder Verschlusselementen und Filtrat und/oder Waschfluid aus den Filtratkanälen (12, 13, 14, 15) abführende Leitungen mit zugeordneten Ventilen und/oder Verschlusselementen aufweist, wobei die Filtratkanäle (12, 13, 14, 15) jeweils derart mit Waschfluid oder Filtrat beaufschlagbar sind, dass jeder Filtratkanal (12, 13, 14, 15) unabhängig von den weiteren Filtratkanälen (12-15) jeweils separat als Filtrat- oder Waschfluidabführkanal oder als Waschfluidzuführkanal schaltbar ist.

24. Filtervorrichtung nach einem der Ansprüche 20 bis 23, **dadurch gekennzeichnet, dass** die Filterkammer (4) zwei Zuläufe (26, 27) zweier kombinierter Suspensions-/Waschfluidleitungen (9a, 9b) in den Filtrationsraum (7) mit bezogen auf den Filtrationsraum (7) unterschiedlichen Einströmrichtungen aufweist.

25. Filtervorrichtung nach einem der Ansprüche 20 bis 24, **dadurch gekennzeichnet, dass** die Filtertücher (5, 6) der Filterkammer (4) aus einem Gewirke oder Gewebe, vorzugsweise einem Polypropylengewebe, mit einer Polyurethanmembranbeschichtung bestehen.

26. Filtervorrichtung nach einem der Ansprüche 20 bis 25, **dadurch gekennzeichnet, dass** die Filterkammer (4) aus als Kombinationsplatten (1a, 1b, 1c, 1d) ausgebildeten Filterplatten gebildet ist, die auf einer Seite einen insbesondere muldenförmigen Kammerseitenbereich (3a) und auf der gegenüberliegenden Seite einen Membranseitenbereich (2a) aufweisen, wobei eine Kammerseite (3a) einer Kombinationsplatte eine Seite der Filterkammer (4) und eine Membranseite (2a) einer anderen Kombinationsplatte die andere Seite der Filterkammer (4) ausbildet.

27. Verwendung einer Filtervorrichtung nach einem der Ansprüche 20 bis 26 zur Durchführung eines Verfahrens nach einem der Ansprüche 1 bis 19.

FIG.1

FIG.2

FIG.3

FIG.4

Europäisches
Patentamt

**EUROPÄISCHER RECHERCHENBERICHT**

**Nummer der Anmeldung**

EP 07 10 9928

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 112 502 A (SATOH KAZUO [JP] ET AL) 12. Mai 1992 (1992-05-12) * Spalte 7, Zeile 36 - Spalte 9, Zeile 21 * * Abbildungen * | 20-22, 25,26 | INV. B01D25/28 B01D25/21 |
| A | | 1,3,5-9, 11-13, 16-18,27 | |
| A | WO 2005/007266 A (BEGEROW GMBH & CO E [DE]; PFEIFFER WERNER [DE]) 27. Januar 2005 (2005-01-27) * Seite 13, Zeile 20 - Seite 14, Zeile 7 * * Abbildungen * | 1,20,27 | |
| A | WO 01/62482 A (GRADIENT ASS [FR]; FOND & ATELIERS LUCIEN CHOQUEN [FR]; VOROBIEV EUGEN) 30. August 2001 (2001-08-30) * Seite 11, Zeile 29 - Seite 12, Zeile 8 * * Seite 14, Zeile 15 - Zeile 24 * * Abbildungen 1-4 * | 1,20,27 | |

RECHERCHIERTE
SACHGEBIETE (IPC)

B01D

~~Der vorliegende Recherchenbericht wurde für alle Patentan~~sprüche erstellt

| Recherchenort | Abschlußdatum der Recherche | Prüfer |
|---|---|---|
| München | 31. März 2008 | Hilt, Daniel |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**Europäisches**
**Patentamt**

Nummer der Anmeldung

EP 07 10 9928

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-18, 20-27

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

16

**Europäisches Patentamt**

**MANGELNDE EINHEITLICHKEIT DER ERFINDUNG ERGÄNZUNGSBLATT B**

Nummer der Anmeldung

EP 07 10 9928

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-18,20-27

   Filtrationsverfahren dadurch gekennzeichnet dass der Waschprozess als Filterkuchenwäsche mit mindestens zwei Waschprozessschritten durchgeführt wird; Filtervorrichtung und Verwendung der Filtervorrichtung zur Durchführung des Verfahrens.
   ---

2. Anspruch: 19

   Filtrationsverfahren dadurch gekennzeichnet, dass die Suspension und/oder ein Spaltwashfluid dem Filtratsraum durch zwei Suspensionsleitungen mit unterschiedlichen Einströmrichtungen derart zugeführt wird, dass im Filtrationsraum eine kreisförmige Rotationsströmung ausgebildet wird.
   ---

**ANHANG ZUM EUROPÄISCHEN RECHERCHENBERICHT
ÜBER DIE EUROPÄISCHE PATENTANMELDUNG NR.**

EP 07 10 9928

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-03-2008

| Im Recherchenbericht angeführtes Patentdokument | | Datum der Veröffentlichung | Mitglied(er) der Patentfamilie | | Datum der Veröffentlichung |
|---|---|---|---|---|---|
| US 5112502 | A | 12-05-1992 | KEINE | | |
| WO 2005007266 | A | 27-01-2005 | DE | 10331383 A1 | 10-02-2005 |
| | | | EP | 1644097 A1 | 12-04-2006 |
| | | | US | 2006180553 A1 | 17-08-2006 |
| WO 0162482 | A | 30-08-2001 | AU | 3572101 A | 03-09-2001 |
| | | | EP | 1257413 A1 | 20-11-2002 |
| | | | FR | 2805199 A1 | 24-08-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19956617 A1